# EUROPEAN PATENT APPLICATION

(11) **EP 2 258 600 A2**
(43) Date of publication of application: **08.12.2010**
(21) Application number: 10380029.8
(22) Date of filing: 04.03.2010
(51) Int. Cl.: B62B 5/06, B62B 9/20

(54) **Positionable grip for children's pushchairs**

(30) Priority: 05.06.2009 ES 200900959 U
(71) Applicant: Jané S.A., 08184 Palau Solita I Plegamans (Barcelona) (ES)
(72) Inventor: Jane Santamaria, Manuel, 08184 Palau Solita I Plegamans (Barcelona) (ES)
(74) Representative: Morgades y Manonelles, Juan Antonio

(57) **Abstract**

It comprises a first part (1) fitted to the upper parts of the handlebar arms and a second part (3) that is the section for gripping, both parts being articulated with each other. The grip is **characterised in that** the first (1) and second (3) parts fit together at an angle, juxtaposing them by means of oblique planes (5 and 6), being linked by a shaft (4) with means (7) to lock into different positions by turning the second part (3) with relation to the first part (1). It has the means (12, 13 and 14, 15) to limit the rotation of the second part (3) with relation to the first part (1).

## Description

### OBJECT OF THE INVENTION

Positionable grip for children's pushchairs.

### FIELD OF THE INVENTION

This grip ends the arms of the children's pushchair handlebar and it is held when moving the pushchair.

### BACKGROUND TO THE INVENTION

There are different models of adjustable grips that adapt to the person who is pushing the pushchair, so they can do it with more comfort.

Generally, these models of grips are adjustable on the same plane, changing their inclination and therefore offering very limited positioning.

### SUMMARY OF THE INVENTION

The object of this invention is a grip that with a simplified design can be positioned in different planes regarding the handlebar arms, enabling it to be gripped from a longitudinal plane to a transversal position regarding the pushchair and also enabling the height of the grip to be varied.

This grip has a first part fitted to the upper parts of the handlebar arms and a second part that is the section for gripping, both parts being articulated with each other, and characterised essentially in that the first and second parts fit together at an angle, juxtaposing them by means of oblique planes, being linked by a shaft with means to lock into different positions by turning the second part with relation to the first part.

This grip also has means to limit the rotation of the second part with relation to the first, so as to facilitate positioning of the grip in the most practical positions for the person who is pushing the pushchair.

These and other characterizing features will be best made apparent by the following detailed description whose understanding will be made easier by the accompanying sheet of drawings showing a practical embodiment being cited only by way of example not limiting the scope of the present invention. DESCRIPTION OF THE DRAWINGS
Fig. 1 shows in a perspective view the grip being the object of the invention,
Fig. 2 is a plan illustration of the different positions the grip may adopt.
Fig. 3 is a longitudinal cross section of a detail of the articulation between the two parts that conform the grip, with the means to lock the rotating parts into different positions, and
Figs. 4 and 5 display a cross section, respectively, of the oblique planes of the first and the second parts that constitute the grip.

### DETAILED DESCRIPTION

According to the drawings, the first part of the grip (1) is fitted at its lower end (2) to the top of the handlebar arms (not shown in the illustration), and a second part (3) that is the part gripped by the user, both parts (1 and 3) being articulated with each other on an shaft (4).

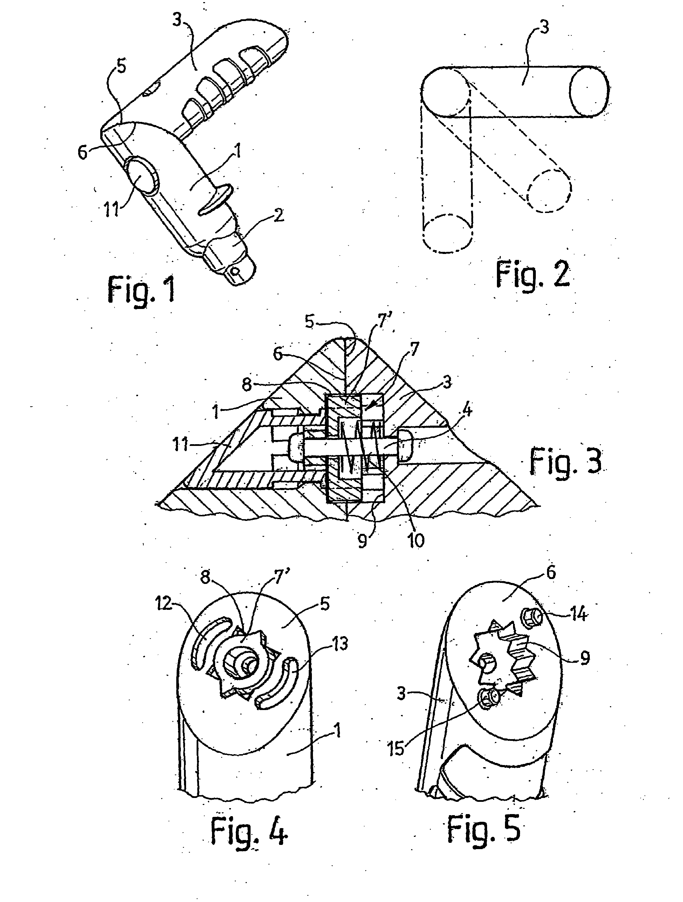

These two parts (1 and 3) of the grip fit together at an angle (Fig. 1) practically perpendicular to each other, being juxtaposed by means of oblique end planes (5 and 6).

The articulation shaft (4) has means (7) to lock into different positions by turning the second part (3) with relation to the first (1), which comprises a toothed cup (7') which is housed, in locked position, in a hole (8) with a toothed edge on the oblique plane (5) of part (1) and partially in a cavity (9) with a toothed edge on the oblique plane (6) of part (3), in which position the toothed cup (7') is pushed by a spring (10) (Fig. 3).

To release these parts and enable part (3) to be turned with relation to part (1), a button is pressed (11) which in turn presses the toothed cup (7'), moving it out of cavity (8) and pushing it entirely into cavity (9) compressing the spring (10).

This grip also has other means to limit the turning of the second part (3) with regard to the first (1), which comprised by two curved slots (12 and 13) diametrically opposed in the oblique plane (5) of the part (1) which each have bosses (14 and 15) in the oblique plane (6) of part (3).

It is understood that both the means that lock the second part (3) into different turning positions, and the means that limit this turning can be any others apart from those indicated, which may be replaced by other means that enable the grip to adopt different positions, variable in height.

The invention can within its essentiality be put into practice in other embodiments differing only in detail from the one having been described above only by way of example, said other embodiments also falling within the scope of the protection being claimed. This positionable grip for children's pushchairs may thus be manufactured in any shape and size, with the most suitable means and materials and with the most convenient accessories, and the components may be replaced by others that are technically equivalent, as all of this is contained within the spirit of the claims.

## Claims

1. Positionable grip for children's pushchairs, comprising a first part of the grip (1) is fitted to the top of the handlebar arms, and a second part (3) that is the part gripped by the user, both parts being articulated with each other, **characterised in that** the first (1) and second (3) parts fit together at an angle, juxtaposing them by means of oblique planes (5 and 6), being linked by a shaft (4) with means (7) to lock into different positions by turning the second part (3) with relation to the first part (1).

2. Positionable grip for children's pushchairs, according to claim 1, **characterised in that** it has means (12, 13 and 14, 15) to limit the rotation of the second part (3) with relation to the first part (1).

3. Positionable grip for children's pushchairs, according to claim 1, **characterised in that** the means (7) for locking the turning of the second part (3) comprises a toothed cup (7') which is housed in a cavity (8) with a toothed edge. Both parts (1 and 3) are opposite each other on oblique planes (5 and 6), the toothed cup being pushed (7') to the locking position by a spring (10), position that can be unlocked by pressing a button (11) that presses the toothed cup (7') compressing the spring (10).

4. Positionable grip for children's pushchairs, according to claim 2, **characterised in that** the means to limit the turning of the second part (3) comprise curved slots (12, 13) in the oblique plane (5) of the part (1) which each have bosses (14 and 15) in the oblique plane (6) of the other part (3).
